# EUROPÄISCHE PATENTSCHRIFT

(11) **EP 1 839 083 B1**
(45) Veröffentlichungstag und Bekanntmachung des Hinweises auf die Patenterteilung: **08.09.2010**
(21) Anmeldenummer: 05700754.4
(22) Anmeldetag: 07.01.2005
(51) Int. Cl.: G02B 27/09

(54) **VORRICHTUNG ZUR HOMOGENISIERUNG VON LICHT**
DEVICE FOR HOMOGENIZING LIGHT
DISPOSITIF D'HOMOGENEISATION DE LA LUMIERE

(43) Veröffentlichungstag der Anmeldung: 03.10.2007
(73) Patentinhaber: LIMO Patentverwaltung GmbH & Co. KG, 36419 Gerstengrund (DE)
(72) Erfinder: Sebastian, Heiko Dr., 54568 Gerolstein (DE); HILL, Wieland Dr., 51519 Odenthal (DE); PETROV, Mikhail, 40472 Düsseldorf (DE)
(74) Vertreter: Basfeld, Rainer
(86) Internationale Anmeldenummer: PCT/EP2005/000103
(87) Internationale Veröffentlichungsnummer: WO 2006/072263

(56) Entgegenhaltungen:
- EP-A- 1 489 438
- WO-A-2004/102256

## Beschreibung

Die vorliegende Erfindung betrifft eine Vorrichtung zur Homogenisierung von Licht gemäß dem Oberbegriff des Anspruchs 1.

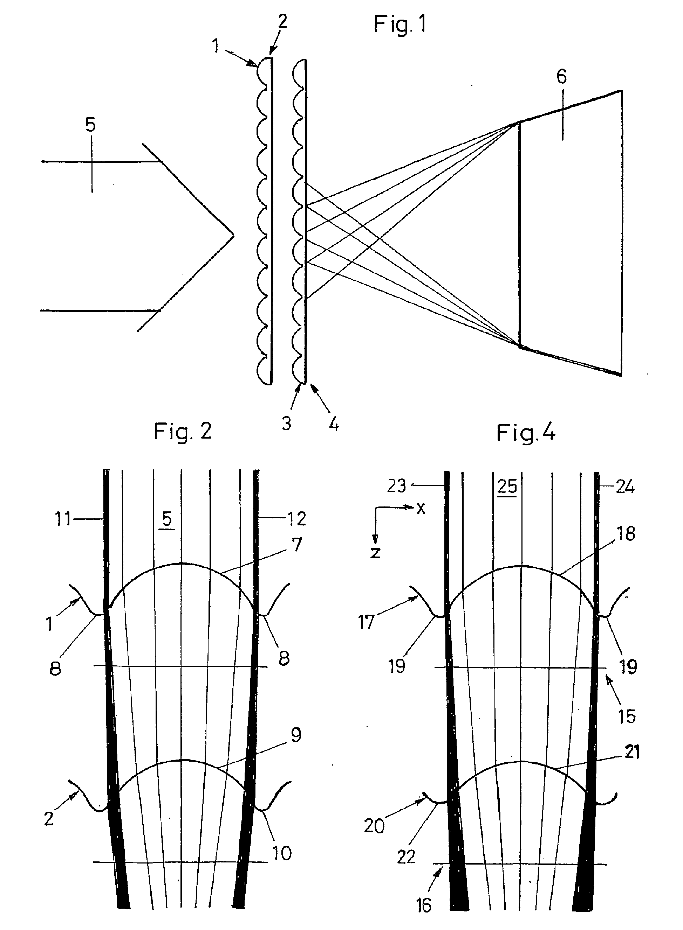

Von der vorgenannten Vorrichtung sollen auch Zylinderlinsenarrays mit konkaven Zylinderlinsen umfasst sein, die deutlich kleiner sind als die zu ihnen benachbarten konvexen Zylinderlinsen. Beispielsweise können die konkaven Zylinderlinsen lediglich Vertiefungen oder annähernd flache Bereiche in dem Zwischenraum zwischen zwei konvexen Zylinderlinsen sein. Vorrichtungen der vorgenannten Art sind bekannt. Derartige Vorrichtungen werden beispielsweise dazu verwendet, vergleichsweise inhomogenes Licht wie es beilspielsweise von einem Excimer-Laser oder von einem Laserdiodenbarren ausgeht, zu homogenisieren. Fig. 1 zeigt schematisch das Arbeitsprinzip derartiger Homogenisiervorrichtungen. Bei der darin abgebildeten Vorrichtung ist das erste Zylinderlinsenarray 1 auf einem ersten Substrat 2 und das zweite Zylinderlinsenarray 3 auf einem zweiten Substrat 4 angeordnet, wobei die Substrate 2, 4 voneinander beabstandet sind. Auf die Vorrichtung auftreffendes inhomogenes Licht 5 wird von der Vorrichtung dadurch homogenisiert, dass von den einzelnen Zylinderlinsen der Zylinderlinsenarrays 1, 3 das Licht homogen über einen Winkelbereich des aus der Vorrichtung austretenden Lichtfeldes 6 verteilt wird. Durch eine hinter dem zweiten Substrat 4 angeordnete Feldlinse kann die homogene Winkelverteilung in dem austretenden Lichtfeld 6 in eine entsprechend homogene Ortsverteilung in einer Arbeitsebene umgewandelt werden.

Bei Vorrichtungen der eingangs genannten Art wird in der Regel die Brennweite der konvexen Zylinderlinsen des zweiten Zylinderlinsenarrays 3 etwa dem Abstand zwischen dem ersten und dem zweiten Zylinderlinsenarray entsprechen. Auf diese Weise werden die konvexen Zylinderlinsen des zweiten Zylinderlinsenarrays eine Ebene senkrecht zur Ausbreitungsrichtung des einfallenden inhomogenen Lichtes 5 im Bereich des ersten Zylinderlinsenarrays in eine Arbeitsebene abbilden.

Fig. 2 zeigt detailliert, wie einfallendes inhomogenes Licht 5 durch konvexe und konkave Zylinderlinsen 7, 8 des ersten Zylinderlinsenarrays 1 und konvexe und konkave Zylinderlinsen 9, 10 des zweiten Zylinderlinsenarrays 2 hindurchverläuft. In Fig. 2 sind insbesondere ein im linken Bildbereich und ein im rechten Bildbereich verlaufender Teilstrahl 11, 12 abgebildet. Diese Teilstrahlen 11, 12 des zu homogenisierenden Lichtes 5 treten durch zwei konkave Zylinderlinsen 8 des ersten Zylinderlinsenarrays hindurch. Es ist ersichtlich, dass die Teilstrahlen 11, 12 durch die konkaven Zylinderlinsen 8 zu einem großen Teil auf eine konvexe Zylinderlinse 9 des zweiten Zylinderlinsenarrays 2 abgelenkt werden. Von dieser konvexen Zylinderlinse 9 werden die abgebildeten Teilstrahlen 11, 12 unter einem derartigen Winkel abgelenkt, dass sie bei Überlagerung mit einer Feldlinse in die äußeren seitlichen Bereiche eines ausgeleuchteten Bereiches in einer Arbeitsebene gelangen.

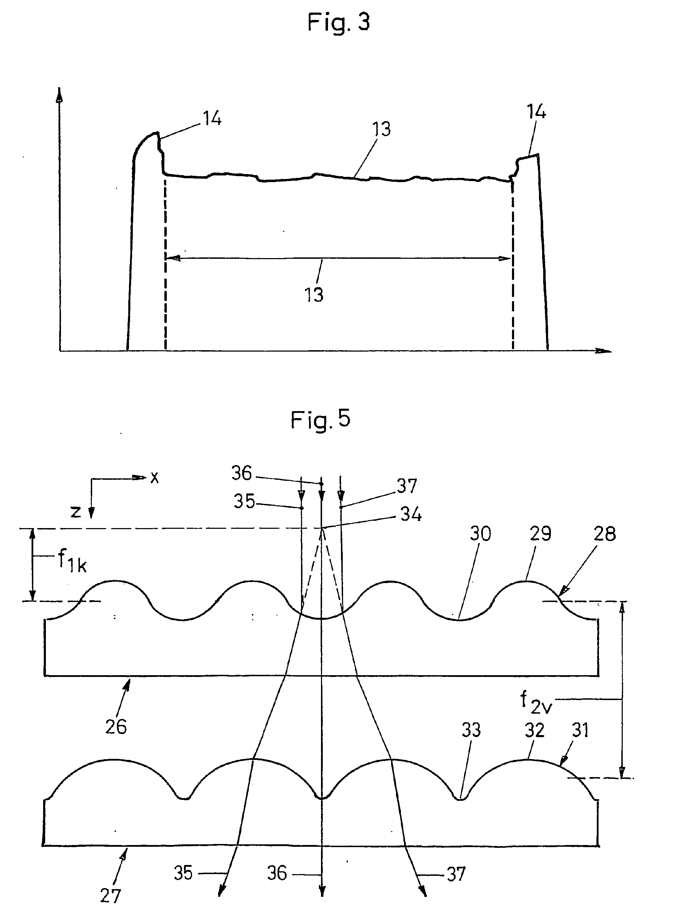

Diese Situation ist in Fig. 3 schematisch verdeutlicht. In Fig. 3 ist die Intensität in einer Arbeitsebene gegen eine Ortskoordinate oder auch gegen eine Winkelkoordinate aufgetragen. Die in Fig. 3 abgebildete Lichtverteilung weist einen mittleren im Wesentlichen homogenen Bereich 13 sowie zwei endseitige Überhöhungen 14 auf, die im Wesentlichen durch die vorgenannten Teilstrahlen 11, 12 beziehungsweise durch weitere entsprechende Teilstrahlen hervorgerufen werden, die durch die konkaven Zylinderlinsen 8 des ersten Zylinderlinsenarrays 1 hindurchgetreten sind. Eine Erklärung für diesen Beitrag ist darin zu sehen, dass die konkaven Zylinderlinsen 8 des ersten Zylinderlinsenarrays 1 einen sehr kleinen Radius und damit eine Brennweite aufweisen, die ebenfalls sehr klein ist. Dadurch liegen die virtuellen Brennpunkte der konkaven Zylinderlinsen 8 etwa in der Ebene des ersten Zylinderlinsenarrays 1 und werden von den konvexen Zylinderlinsen 9 des zweiten Zylinderlinsenarrays 2 in die Arbeitsebene abgebildet.

Die aus Fig. 3 ersichtlichen und für den Stand der Technik typischen Überhöhungen 14 sind für eine ganze Reihe von Anwendungen störend.

Aus der EP 1 489 438 A1 ist eine Vorrichtung der eingangs genannten Art bekannt. Die darin beschriebene Vorrichtung umfasst zwei hintereinander angeordnete Zylinderlinsenarrays, die jeweils abwechselnd konvexe und konkave Zylinderlinsen aufweisen. Dabei sind entweder die konvexen oder die konkaven Zylinderlinsen beider Arrays gleich groß, wohingegen in dem ersten der beiden Arrays größere und kleinere konvexe Zylinderlinsen oder größere und kleinere konkave Zylinderlinsen vorgesehen sind. Weiterhin fluchten bei einer der beschriebenen Ausführungsformen die Scheitellinien der konvexen Zylinderlinsen des ersten Zylinderlinsenarrays mit den Scheitellinien der konvexen Zylinderlinsen des zweiten Zylinderlinsenarrays.

Das der vorliegenden Erfindung zugrunde liegende Problem ist die Schaffung einer Vorrichtung der eingangs genannten Art, die eine homogenere Lichtverteilung in einer Arbeitsebene erzeugen kann.

Dies wird erfindungsgemäß durch eine Vorrichtung der eingangs genannten Art mit den kennzeichnenden Merkmalen des Anspruchs 1 erreicht. Die Unteransprüche betreffen bevorzugte Weiterbildungen der Erfindung.

Gemäß Anspruch 1 ist vorgesehen, dass die Scheitellinien der konkaven Zylinderlinsen des ersten Zylinderlinsenarrays in einer Richtung, die senkrecht zu der Richtung, in der die Zylinderlinsen nebeneinander angeordnet sind, und senkrecht zu den Zylinderachsen der Zylinderlinsen des ersten und/oder des zweiten Zylinderlinsenarrays ausgerichtet ist, mit den Scheitellinien der konkaven Zylinderlinsen des zweiten Zylinderlinsenarrays fluchten.

Beispielsweise durch die gezielte Veränderung der Ausdehnung und/oder der Krümmung der konkaven Zylinderlinsen des ersten und/oder des zweiten Zylinderlinsenarrays können die aus Fig. 3 ersichtlichen Überhöhungen vermieden werden.

Dabei kann beispielsweise vorgesehen sein, dass die konkaven Zylinderlinsen des zweiten Zylinderlinsenarrays in der Richtung, in der die Zylinderlinsen nebeneinander angeordnet sind, größer, vorzugsweise wesentlich größer als die konkaven Zylinderlinsen des ersten Zylinderlinsenarrays sind. Beispielsweise können die konkaven Zylinderlinsen des zweiten Zylinderlinsenarrays in dieser Richtung mindestens etwa doppelt so groß wie die konkaven Zylinderlinsen des ersten zylinderlinsenarrays sein. Durch eine Vergrößerung der konkaven Zylinderlinsen des zweiten Zylinderlinsenarrays kann zumindest teilweise vermieden werden, dass die durch die konkaven Zylinderlinsen des ersten Zylinderlinsenarrays hindurchgetretenen Teilstrahlen auf konvexe Zylinderlinsen des zweiten Zylinderlinsenarrays auftreffen. Damit können aber diese durch die konkaven Zylinderlinsen des ersten Zylinderlinsenarray hindurchgetretenen Teilstrahlen nicht mehr von den konvexen Zylinderlinsen des zweiten Zylinderlinsenarrays in die seitlichen Bereiche des Lichtfeldes in der Arbeitsebene abgelenkt beziehungsweise abgebildet werden. Dadurch fallen die Überhöhungen weg. Dadurch wird der aus Fig. 3 ersichtliche homogene Bereich 13 vergrößert. Insbesondere wird aufgrund der Tatsache, dass die durch die konkaven Zylinderlinsen des ersten Zylinderlinsenarrays hindurchgetretenen Teilstrahlen durch die konkaven Zylinderlinsen des zweiten Zylinderlinsenarrays hindurchtreten, erreicht, dass diese Teilstrahlen im Wesentlichen über die gesamte Breite des homogenisierten Lichtfeldes in der Arbeitsebene verteilt werden. Auf diese Weise wird die Effizienz der Vorrichtung (die Lichtmenge im homogenen Bereich beziehungsweise die Lichtmenge insgesamt) vergrößert.

Es besteht weiterhin die Möglichkeit, dass die konvexen Zylinderlinsen des ersten Zylinderlinsenarrays, in der Richtung, in der die Zylinderlinsen nebeneinander angeordnet sind, größer, insbesondere um ein mehrfaches größer als die konkaven Zylinderlinsen des ersten Zylinderlinsenarrays sind. Insbesondere können die konkaven Zylinderlinsen lediglich Vertiefungen oder beinahe flache Bereiche zwischen den konvexen Zylinderlinsen des ersten Zylinderlinsenarrays darstellen.

Wie im Stand der Technik besteht auch bei der vorliegenden Erfindung die Möglichkeit, dass die Brennweite der konvexen Zylinderlinsen des zweiten Zylinderlinsenarrays etwa so groß ist wie der Abstand zwischen dem ersten Zylinderlinsenarray und dem zweiten Zylinderlinsenarray. Auf diese Weise wird durch die konvexen Zylinderlinsen des zweiten Zylinderlinsenarrays eine Abbildung der Ebene des ersten Zylinderlinsenarrays in die Arbeitsebene erreicht.

Gemäß einer weiteren bevorzugten Ausführungsform der vorliegenden Erfindung besteht die Möglichkeit, dass die Brennweite der konkaven Zylinderlinsen des ersten Zylinderlinsenarrays wesentlich größer ist als die Brennweite der konvexen Zylinderlinsen des zweiten Zylinderlinsenarrays. Auf diese Weise kann erreicht werden, dass die virtuellen Brennpunkte der konkaven Zylinderlinsen des ersten Zylinderlinsenarrays vergleichsweise weit von der Brennebene des zweiten Zylinderlinsenarrays entfernt sind, so dass diese Brennpunkte nicht scharf von den konvexen Zylinderlinsen des zweiten Zylinderlinsenarrays in die Arbeitsebene abgebildet werden. Auf diese Weise kann somit selbst bei vergleichsweise kleinen konkaven Zylinderlinsen des zweiten Zylinderlinsenarrays und somit selbst bei durch die konvexen Zylinderlinsen des zweiten Zylinderlinsenarrays hindurchtretenden Teilstrahlen, die vorher durch die konkaven Zylinderlinsen des ersten Zylinderlinsenarrays hindurchgetreten sind, erreicht werden, dass keine Überhöhungen in den seitlichen Bereichen der Lichtverteilung in der Arbeitsebene hervorgerufen werden.

Es besteht insbesondere die Möglichkeit, dass die konkaven Zylinderlinsen des ersten Zylinderlinsenarrays in der Richtung, in der die Zylinderlinsen nebeneinander angeordnet sind, etwa die gleiche Ausdehnung aufweisen wie die konvexen Zylinderlinsen des ersten Zylinderlinsenarrays in der Richtung, in der die Zylinderlinsen nebeneinander angeordnet sind. Bei einer derartigen Anordnung können die Brennpunkte der konkaven Zylinderlinsen deutlich von der Ebene des ersten Zylinderlinsenarrays entfernt sein.

Es besteht die Möglichkeit, dass die Vorrichtung ein Substrat umfasst, auf dem das erste Zylinderlinsenarray und das zweite Zylinderlinsenarray auf einander gegenüberliegenden Seiten angeordnet sind. Dieses Substrat kann dann eine entsprechende Dicke aufweisen, so dass das erste Zylinderlinsenarray im Abstand der Brennweite der konvexen Zylinderlinsen des zweiten Zylinderlinsenarrays von diesem entfernt ist.

Alternativ dazu besteht die Möglichkeit, dass die Vorrichtung ein erstes Substrat und ein zweites, von dem ersten unterschiedliches, insbesondere von dem ersten Substrat beabstandetes Substrat umfasst, wobei das erste Zylinderlinsenarray auf dem ersten Substrat und das zweite Zylinderlinsenarray auf dem zweiten Substrat angeordnet sind. Bei einer derartigen Vorrichtung kann dann der Abstand zwischen den Substraten angepasst werden, so dass der Abstand zwischen erstem und zweitem Zylinderlinsenarray der Brennweite der konvexen Zylinderlinsen des zweiten Zylinderlinsenarrays entspricht.

Bei einer derartigen Vorrichtung besteht weiterhin die Möglichkeit, dass die Vorrichtung ein drittes Zylinderlinsenarray umfasst, dass auf der dem ersten Zylinderlinsenarray gegenüberliegenden Seite des ersten Substrats angeordnet ist und konvexe und konkave Zylinderlinsen mit zueinander parallelen Zylinderachsen aufweist, die abwechselnd nebeneinander angeordnet sind, wobei die Zylinderachsen der Zylinderlinsen des ersten Zylinderlinsenarrays senkrecht zu den Zylinderachsen der Zylinderlinsen des dritten Zylinderlinsenarrays angeordnet sind.

Alternativ oder zusätzlich dazu kann vorgesehen sein, dass die Vorrichtung weiterhin ein viertes Zylinderlinsenarray umfasst, das auf der dem zweiten Zylinderlinsenarray gegenüberliegenden Seite des zweiten Substrats angeordnet ist und konvexe und konkave Zylinderlinsen mit zueinander parallelen Zylinderachsen aufweist, die abwechselnd nebeneinander angeordnet sind, wobei die Zylinderachsen der Zylinderlinsen des zweiten Zylinderlinsenarrays senkrecht zu den Zylinderachsen der Zylinderlinsen des vierten Zylinderlinsenarrays angeordnet sind. Durch die dritten und gegebenenfalls vierten Zylinderlinsenarrays kann eine Homogenisierung des zu homogenisierenden Lichtes in einer Richtung erfolgen, die senkrecht zu der Richtung ist, in der die ersten und zweiten Zylinderlinsenarrays zu einer Homogenisierung beitragen. Dazu können die dritten und vierten Zylinderlinsenarrays entsprechend den ersten und zweiten Zylinderlinsenarrays ausgebildet sein, insbesondere hinsichtlich der Breiten der konkaven Zylinderlinsen des dritten und vierten Zylinderlinsenarrays. Weiterhin kann auch der Abstand des dritten von dem vierten Zylinderlinsenarray im Wesentlichen der Brennweite der konvexen Zylinderlinsen des dritten Zylinderlinsenarrays entsprechen.

Weitere Merkmale und Vorteile der vorliegenden Erfindung werden deutlich anhand der nachfolgenden Beschreibung bevorzugter Ausführungsbeispiele unter Bezugnahme auf die beiliegenden Abbildungen. Darin zeigen
- Fig. 1: schematisch das Arbeitsprinzip einer Vorrichtung zur Homogenisierung von Licht;
- Fig. 2: eine schematische Seitenansicht einer Vorrichtung zur Homogenisierung gemäß dem Stand der Technik;
- Fig. 3: eine schematische Ansicht einer Lichtverteilung in einer Arbeitsebene, die durch eine Vorrichtung zur Homogenisierung gemäß Fig. 2 erzeugt wird;
- Fig. 4: schematisch einen Ausschnitt einer ersten Ausführungsform einer erfindungsgemäßen Vorrichtung;
- Fig. 5: schematisch einen Ausschnitt aus einer zweiten Ausführungsform einer erfindungsgemäßen Vorrichtung.

In Fig. 4 und in Fig. 5 sind zur Verdeutlichung kartesische Koordinatensysteme eingezeichnet.

Die aus Fig. 4 ersichtliche erste Ausführungsform einer erfindungsgemäßen Vorrichtung umfasst ein erstes Substrat 15 und ein zweites Substrat 16. Das erste Substrat 15 weist auf seiner Eintrittsfläche ein erstes Zylinderlinsenarray 17 auf, wohingegen die Austrittsfläche plan gestaltet ist. Alternativ dazu besteht auch die Möglichkeit, die Austrittsfläche ebenfalls mit einem Zylinderlinsenarray zu versehen, das beispielsweise gekreuzt zu dem ersten Zylinderlinsenarray 17 ausgerichtet ist. Das erste Zylinderlinsenarray 17 weist konvexe Zylinderlinsen 18 und konkave Zylinderlinsen 19 auf, die abwechselnd nebeneinander angeordnet sind. In dem in Fig. 4 abgebildeten Ausführungsbeispiel sind nur zwei konkave Zylinderlinsen 19 und eine konvexe Zylinderlinse 18 angedeutet. Es können beziehungsweise sollen jedoch in X-Richtung nebeneinander eine Vielzahl von konvexen und konkaven Zylinderlinsen 18, 19 nebeneinander angeordnet sein. Die konkaven Zylinderlinsen 19 sind in X-Richtung, das heißt in der Richtung, in der die Zylinderlinsen 18, 19 nebeneinander angeordnet sind, deutlich weniger ausgedehnt als die konvexen Zylinderlinsen 18.

Das zweite Substrat 16 weist auf seiner Eintrittsfläche, das heißt auf seiner dem ersten Substrat 15 zugewandten Seite ein zweites Zylinderlinsenarray 20 mit konvexen Zylinderlinsen 21 und konkaven Zylinderlinsen 22 auf. Die konvexen und konkaven Zylinderlinsen 21, 22 sind in X-Richtung abwechselnd nebeneinander angeordnet, wobei hier ebenfalls eine Vielzahl von konvexen und konkaven Zylinderlinsen 21, 22 auf der Eintrittsfläche des Substrates 16 vorgesehen sein können. Aus Fig. 4 ist weiterhin ersichtlich, dass sowohl die Zylinderachsen der Zylinderlinsen 18, 19 des ersten Zylinderlinsenarrays 17 als auch die Zylinderachsen der konvexen und konkaven Zylinderlinsen 21, 22 des zweiten Zylinderlinsenarrays 20 in Y-Richtung, das heißt in einer Richtung senkrecht zu der Richtung X, in der die Zylinderlinsen 18, 19, 21, 22 nebeneinander angeordnet sind, ausgerichtet sind. Die Austrittsfläche des zweiten Substrates 16 ist ebenfalls plan gestaltet. Alternativ könnte auch die Austrittsfläche des zweiten Substrates 16 ebenfalls mit einem weiteren Zylinderlinsenarray versehen sein, bei dem die Zylinderachsen der Zylinderlinsen senkrecht zu den Zylinderachsen der Zylinderlinsen 21, 22 des zweiten Zylinderlinsenarrays 20 ausgerichtet sein könnten.

Aus Fig. 4 ist ersichtlich, dass die konkaven Zylinderlinsen 22 des zweiten Zylinderlinsenarrays 20 in X-Richtung, das heißt in der Richtung, in der die Zylinderlinsen 18, 19, 21, 22 nebeneinander angeordnet sind, deutlich größer sind als die konkaven Zylinderlinsen 19 des ersten Zylinderlinsenarrays 17. Insbesondere sind die konkaven Zylinderlinsen 22 des zweiten Zylinderlinsenarrays 20 in diesem Ausführungsbeispiel etwa doppelt so breit wie die konkaven Zylinderlinsen 19 des ersten Zylinderlinsenarrays 17.

In Fig. 4 sind weiterhin Teilstrahlen 23, 24 des zu homogenisierenden Lichtes 25 eingezeichnet, die durch die konkaven Zylinderlinsen 19 des ersten Zylinderlinsenarrays 17 hindurchtreten. Im Gegensatz zu den Teilstrahlen 11, 12 gemäß dem Stand der Technik (siehe Fig. 2) treten die Teilstrahlen 23, 24 nicht oder nur zu einem unwesentlichen Anteil durch die konvexen Zylinderlinsen 21 des zweiten Zylinderlinsenarrays 20 hindurch, sondern durch die verbreiterten konkaven Zylinderlinsen 22 des zweiten Zylinderlinsenarrays. Auf diese Weise werden die Teilstrahlen 23, 24 von den konkaven Zylinderlinsen 22 des zweiten Zylinderlinsenarrays 20 derart abgelenkt, dass sie in der Arbeitsebene über einen breiten Bereich, insbesondere über die gesamte Breite des homogenisierten Lichtfeldes verteilt werden. Auf diese Weise werden die aus Fig. 3 ersichtlichen seitlichen Überhöhungen 14 gemäß dem Stand der Technik vermieden.

Auch die aus Fig. 5 ersichtliche zweite Ausführungsform einer erfindungsgemäßen Vorrichtung umfasst ein erstes Substrat 26 und ein zweites Substrat 27. Das erste Substrat 26 weist auf seiner Eintrittsfläche ein erstes Zylinderlinsenarray 28 mit konvexen Zylinderlinsen 29 und konkaven Zylinderlinsen 30 auf. Das zweite Substrat 27 weist auf seiner Eintrittsfläche, das heißt auf seiner dem ersten Substrat 26 zugewandten Seite ein zweites Zylinderlinsenarray 31 mit konvexen Zylinderlinsen 32 und konkaven Zylinderlinsen 33 auf. Bei beiden Substraten 26, 27 können nicht nur die abgebildeten Anzahlen von Zylinderlinsen 29, 30, 32, 33 sondern eine Vielzahl von Zylinderlinsen 29, 30, 32, 33 abwechselnd nebeneinander angeordnet sein.

Im Gegensatz zu dem Ausführungsbeispiel gemäß Fig. 4 sind bei dem Ausführungsbeispiel gemäß Fig. 5 die konkaven Zylinderlinsen 30 des ersten Zylinderlinsenarrays 28 in X-Richtung, das heißt in der Richtung, in der die Zylinderlinsen 29, 30 abwechselnd nebeneinander angeordnet sind, etwa gleich breit oder gleich ausgedehnt wie die konvexen Zylinderlinsen 29 des ersten Zylinderlinsenarrays 28. Im Gegensatz dazu sind die konkaven Zylinderlinsen 33 des zweiten Zylinderlinsenarrays 31 deutlich kleiner als die konvexen Zylinderlinsen 32 des zweiten Zylinderlinsenarrays 31.

Aufgrund der im Wesentlichen gleichen Breite der konkaven und konvexen Zylinderlinsen 30, 29 des ersten Zylinderlinsenarrays 28 ist die Brennweite f₁ₖ der konkaven Zylinderlinsen 30 des ersten Zylinderlinsenarrays 28 vergleichsweise groß, das heißt insbesondere etwa doppelt so groß wie die Höhe oder die Ausdehnung der konvexen Zylinderlinsen 29 in Ausbreitungsrichtung Z des zu homogenisierenden Lichtes. In Fig. 5 ist weiterhin zur Verdeutlichung die Brennweite f₂ᵥ der konvexen Zylinderlinsen 32 des zweiten Zylinderlinsenarrays 31 eingezeichnet. Fig. 5 lässt sich entnehmen, dass diese Brennweite f₂ᵥ der konvexen Zylinderlinsen 32 etwa dem Abstand zwischen dem ersten Zylinderlinsenarray 28 und dem zweiten Zylinderlinsenarray 31 entspricht. Aufgrund der vergleichsweise großen Brennweite f₁ₖ der konkaven Zylinderlinsen 30 des ersten Zylinderlinsenarrays 28 wird der in Fig. 5 schematisch angedeutete virtuelle Brennpunkt 34 der konkaven Zylinderlinsen 30 von den konvexen Zylinderlinsen 32 des zweiten Zylinderlinsenarrays 31 nicht in die Arbeitsebene abgebildet. Dies wird in Fig. 5 durch beispielhaft eingezeichnete Teilstrahlen 35, 36, 37 verdeutlicht.

Sowohl bei der Ausführungsform gemäß Fig. 4 als auch bei der Ausführungsform gemäß Fig. 5 fluchten in Ausbreitungsrichtung des zu homogenisierenden Lichtes die Scheitellinien der konvexen Zylinderlinsen 18, 29 des ersten Zylinderlinsenarrays 17, 28 mit den Scheitellinien der konvexen Zylinderlinsen 21, 32 des zweiten Zylinderlinsenarrays 20, 31. Weiterhin fluchten auch die Scheitellinien der konkaven Zylinderlinsen 19, 30 des ersten Zylinderlinsenarrays 17, 28 mit den Scheitellinien der konkaven Zylinderlinsen 22, 33 des zweiten Zylinderlinsenarrays 20, 31.

## Patentansprüche

1. Vorrichtung zur Homogenisierung von Licht, umfassend
- ein erstes Zylinderlinsenarray (17, 28), durch das das zu homogenisierende Licht (25) hindurch treten kann, wobei das erste Zylinderlinsenarray (17, 28) konvexe und konkave Zylinderlinsen (18, 19, 29, 30) mit zueinander parallelen Zylinderachsen aufweist, die abwechselnd nebeneinander angeordnet sind;
- ein zweites Zylinderlinsenarray (20, 31), durch das das durch das erste Zylinderlinsenarray (17, 28) hindurch getretene Licht hindurch treten kann, wobei das zweite Zylinderlinsenarray (20, 31) konvexe und konkave Zylinderlinsen (21, 22, 32, 33) mit zueinander parallelen Zylinderachsen aufweist, die abwechselnd nebeneinander angeordnet sind, und wobei die Zylinderachsen der Zylinderlinsen (21, 22, 32, 33) des zweiten Zylinderlinsenarrays (20, 31) parallel zu den Zylinderachsen der Zylinderlinsen (18, 19, 29, 39) des ersten Zylinderlinsenarrays (17, 28) ausgerichtet sind, wobei die konkaven Zylinderlinsen (19, 30) des ersten Zylinderlinsenarrays (17, 28) in der Richtung (X), in der die Zylinderlinsen (18, 19, 29, 30) nebeneinander angeordnet sind, eine andere Ausdehnung aufweisen als die konkaven Zylinderlinsen (22, 33) des zweiten Zylinderlinsenarrays (20, 28, 31) in der Richtung (X), in der die Zylinderlinsen (21, 22, 32, 33) nebeneinander angeordnet sind, und wobei die Scheitellinien der konvexen Zylinderlinsen (18, 29) des ersten Zylinderlinsenarrays (17, 28) in der Richtung (Z), die senkrecht zu der Richtung (X), in der die Zylinderlinsen (18, 19, 21, 22, 29, 30, 32, 33) nebeneinander angeordnet sind, und senkrecht zu den Zylinderachsen der Zylinderlinsen (18, 19, 21, 22, 29, 30, 32, 33) des ersten und des zweiten Zylinderlinsenarrays (17, 20, 28, 31) ausgerichtet ist, mit den Scheitellinien der konvexen Zylinderlinsen (21, 32) des zweiten Zylinderlinsenarrays (20, 31) fluchten;
**dadurch gekennzeichnet, dass** die Scheitellinien der konkaven Zylinderlinsen (19, 30) des ersten Zylinderlinsenarrays (17, 28) in einer Richtung (Z), die senkrecht zu der Richtung (X), in der die Zylinderlinsen (18, 19, 21, 22, 29, 30, 32, 33) nebeneinander angeordnet sind, und senkrecht zu den Zylinderachsen der Zylinderlinsen (18, 19, 21, 22, 29, 30, 32, 33) des ersten und des zweiten Zylinderlinsenarrays (17, 20, 28, 31) ausgerichtet ist, mit den Scheitellinien der konkaven Zylinderlinsen (22, 33) des zweiten Zylinderlinsenarrays (20, 31) fluchten.

2. Vorrichtung nach Anspruch 1, **dadurch gekennzeichnet, dass** die konkaven Zylinderlinsen (19, 30) des ersten Zylinderlinsenarrays (17, 28) in der Richtung (X), in der die Zylinderlinsen (18, 19, 29, 39) nebeneinander angeordnet sind, eine andere Krümmung aufweisen als die konkaven Zylinderlinsen (22, 33) des zweiten Zylinderlinsenarrays (20, 31) in der Richtung (X), in der die Zylinderlinsen (21, 22, 32, 33) nebeneinander angeordnet sind.

3. Vorrichtung nach einem der Ansprüche 1 oder 2, **dadurch gekennzeichnet, dass** die Zylinderachsen der Zylinderlinsen (18, 19, 21, 22, 29, 30, 32, 33) des ersten und/oder des zweiten Zylinderlinsenarrays (17, 20, 28, 31) senkrecht zu der Richtung (X) ausgerichtet sind, in der die Zylinderlinsen (18, 19, 21, 22, 29, 30, 32, 33) nebeneinander angeordnet sind.

4. Vorrichtung nach einem der Ansprüche 1 bis 3, **dadurch gekennzeichnet, dass** die konkaven Zylinderlinsen (22) des zweiten Zylinderlinsenarrays (20) in der Richtung (X), in der die Zylinderlinsen (18, 19, 21, 22) nebeneinander angeordnet sind, größer als die konkaven Zylinderlinsen (19) des ersten Zylinderlinsenarrays (17) sind.

5. Vorrichtung nach einem der Ansprüche 1 bis 4, **dadurch gekennzeichnet, dass** die konvexen Zylinderlinsen (18) des ersten Zylinderlinsenarrays (17) in der Richtung (X), in der die Zylinderlinsen (18, 19, 21, 22) nebeneinander angeordnet sind, um ein Mehrfaches größer als die konkaven Zylinderlinsen (19) des ersten Zylinderlinsenarrays (17) sind.

6. Vorrichtung nach einem der Ansprüche 1 bis 5, **dadurch gekennzeichnet, dass** die Brennweite (f_{2y}) der konvexen Zylinderlinsen (21, 32) des zweiten Zylinderlinsenarrays (20, 31) etwa so groß ist wie der Abstand zwischen dem ersten Zylinderlinsenarray (17, 28) und dem zweiten Zylinderlinsenarray (20, 31).

7. Vorrichtung nach einem der Ansprüche 1 bis 6, **dadurch gekennzeichnet, dass** die Brennweite (f₁ₖ) der konkaven Zylinderlinsen (30) des ersten Zylinderlinsenarrays (28) größer ist als die Ausdehnung der konvexen Zylinderlinsen (29) des ersten Zylinderlinsenarrays (28) in einer Richtung (Z), die senkrecht zu der Richtung (X), in der die Zylinderlinsen (18, 19, 21, 22, 29, 30, 32, 33) nebeneinander angeordnet sind, und senkrecht zu den Zylinderachsen der Zylinderlinsen (18, 19, 21, 22, 29, 30, 32, 33) des ersten und/oder des zweiten Zylinderlinsenarrays (17, 20, 28, 31) ausgerichtet ist.

8. Vorrichtung nach Anspruche 7, **dadurch gekennzeichnet, dass** die Brennweite (f₁ₖ) der konkaven Zylinderlinsen (30) des ersten Zylinderlinsenarrays (28) mindestens doppelt so groß ist wie die Ausdehnung der konvexen Zylinderlinsen (29) des ersten Zylinderlinsenarrays in einer Richtung (Z), die senkrecht zu der Richtung (X), in der die Zylinderlinsen (18, 19, 21, 22, 29, 30, 32, 33) nebeneinander angeordnet sind, und senkrecht zu den Zylinderachsen der Zylinderlinsen (18, 19, 21, 22, 29, 30, 32, 33) des ersten und/oder des zweiten Zylinderlinsenarrays (17, 20, 28, 31) ausgerichtet ist.

9. Vorrichtung nach einem der Ansprüche 7 oder 8, **dadurch gekennzeichnet, dass** die die konkaven Zylinderlinsen (30) des ersten Zylinderlinsenarrays (28) in der Richtung (X), in der die Zylinderlinsen (29, 30) nebeneinander angeordnet sind, die gleiche Ausdehnung aufweisen wie die konvexen Zylinderlinsen (29) des ersten Zylinderlinsenarrays (28) in der Richtung (X), in der die Zylinderlinsen (29, 30) nebeneinander angeordnet sind.

10. Vorrichtung nach einem der Ansprüche 1 bis 9, **dadurch gekennzeichnet, dass** die Brennweite (f₁ₖ) der konkaven Zylinderlinsen (30) des ersten Zylinderlinsenarrays (28) größer ist als die Brennweite der konkaven Zylinderlinsen (33) des zweiten Zylinderlinsenarrays (31).

11. Vorrichtung nach einem der Ansprüche 1 bis 10, **dadurch gekennzeichnet, dass** die Vorrichtung ein Substrat umfasst, auf dem das erste Zylinderlinsenarray und das zweite Zylinderlinsenarray auf einander gegenüberliegenden Seiten angeordnet sind.

12. Vorrichtung nach einem der Ansprüche 1 bis 10, **dadurch gekennzeichnet, dass** die Vorrichtung ein erstes Substrat (15, 26) und ein zweites, von dem ersten unterschiedliches, insbesondere von dem ersten Substrat (15, 26) beabstandetes, Substrat (16, 27) umfasst, wobei das erste Zylinderlinsenarray (17, 28) auf dem ersten Substrat (15, 26) und das zweite Zylinderlinsenarray (20, 31) auf dem zweiten Substrat (16, 27) angeordnet sind.

13. Vorrichtung nach Anspruche 12, **dadurch gekennzeichnet, dass** die Vorrichtung weiterhin ein drittes Zylinderlinsenarray umfasst, das auf der dem ersten Zylinderlinsenarray (17, 28) gegenüberliegenden Seite des ersten Substrats (15, 26) angeordnet ist und konvexe und konkave Zylinderlinsen mit zueinander parallelen Zylinderachsen aufweist, die abwechselnd nebeneinander angeordnet sind, wobei die Zylinderachsen der Zylinderlinsen (18, 19, 29, 30) des ersten Zylinderlinsenarrays (17, 28) senkrecht zu den Zylinderachsen der Zylinderlinsen des dritten Zylinderlinsenarrays angeordnet sind.

14. Vorrichtung nach einem der Ansprüche 12 oder 13, **dadurch gekennzeichnet, dass** die Vorrichtung weiterhin ein viertes Zylinderlinsenarray umfasst, das auf der dem zweiten Zylinderlinsenarray (20, 31) gegenüberliegenden Seite des zweiten Substrats (16, 27) angeordnet ist und konvexe und konkave Zylinderlinsen mit zueinander parallelen Zylinderachsen aufweist, die abwechselnd nebeneinander angeordnet sind, wobei die Zylinderachsen der Zylinderlinsen (21, 22, 32, 33) des zweiten Zylinderlinsenarrays (20, 31) senkrecht zu den Zylinderachsen der Zylinderlinsen des vierten Zylinderlinsenarrays angeordnet sind.

## Claims

1. Device for homogenizing light, comprising
- a first cylindrical lens array (17, 28) through which the light (25) to be homogenized can pass, the first cylindrical lens array (17, 28) having convex and concave cylindrical lenses (18, 19, 29, 30) with mutually parallel cylinder axes that are arranged next to one another in an alternating fashion;
- a second cylindrical lens array (20, 31) through which the light that has passed through the first cylindrical lens array (17, 28) can pass, the second cylindrical lens array (20, 31) having convex and concave cylindrical lenses (21, 22, 32, 33) with mutually parallel cylinder axes that are arranged next to one another in an alternating fashion, and the cylinder axes of the cylindrical lenses (21, 22, 32, 33) of the second cylindrical lens array (20, 31) being aligned parallel to the cylinder axes of the cylindrical lenses (18, 19, 29, 39) of the first cylindrical lens array (17, 28), in the direction (X), in which the cylindrical lenses (18, 19, 29, 30) are arranged next to one another, the concave cylindrical lenses (19, 30) of the first cylindrical lens array (17, 28) exhibiting an extent other than the concave cylindrical lenses (22, 33) of the second cylindrical lens array (20, 28, 31) in the direction (X), in which the cylindrical lenses (21, 22, 32, 33) are arranged next to one another and the vertex lines of the convex cylindrical lenses (18, 29) of the first cylindrical lens array (17, 28) being aligned with the vertex lines of the convex cylindrical lenses (21, 32) of the second cylindrical lens array (20, 31) in the direction (Z) that is aligned perpendicular to the direction (X) in which the cylindrical lenses (18, 19, 21, 22, 29, 30, 32, 33) are arranged next to one another, and perpendicular to the cylinder axes of the cylindrical lenses (18, 19, 21, 22, 29, 30, 32, 33) of the first and the second cylindrical lens array (17, 20, 28, 31):
**characterized in that** the vertex lines of the concave cylindrical lenses (19, 30) of the first cylindrical lens array (17, 28) are aligned with the vertex lines of the concave cylindrical lenses (22, 33) of the second cylindrical lens array (20, 31) in a direction (Z) that is aligned perpendicular to the direction (X) in which the cylindrical lenses (18, 19, 21, 22, 29, 30, 32, 33) are arranged next to one another, and perpendicular to the cylinder axes of the cylindrical lenses (18, 19, 21, 22, 29, 30, 32, 33) of the first and the second cylindrical lens array (17, 20, 28, 31).

2. Device according to Claim 1, **characterized in that**, in the direction (X) in which the cylindrical lenses (18, 19, 29, 39) are arranged next to one another, the concave cylindrical lenses (19, 30) of the first cylindrical lens array (17, 28) exhibit a curvature other than the concave cylindrical lenses (22, 33) of the second cylindrical lens array (20, 31) in the direction (X) in which the cylindrical lenses (21, 22, 32, 33) are arranged next to one another.

3. Device according to either of Claims 1 and 2, **characterized in that** the cylinder axes of the cylindrical lenses (18, 19, 21, 22, 29, 30, 32, 33) of the first and/or the second cylindrical lens array (17, 20, 28, 31) are aligned perpendicular to the direction (X) in which the cylindrical lenses (18, 19, 21, 22, 29, 30, 32, 33) are arranged next to one another.

4. Device according to one of Claims 1 to 3, **characterized in that**, in the direction (X) in which the cylindrical lenses (18, 19, 21, 22) are arranged next to one another, the concave cylindrical lenses (22) of the second cylindrical lens array (20) are larger than the concave cylindrical lenses (19) of the first cylindrical lens array (17).

5. Device according to one of Claims 1 to 4, **characterized in that**, in the direction (X) in which the cylindrical lenses (18, 19, 21, 22) are arranged next to one another, the convex cylindrical lenses (18) of the first cylindrical lens array (17) are larger by a multiple, than the concave cylindrical lenses (19) of the first cylindrical lens array (17).

6. Device according to one of Claims 1 to 5, **characterized in that** the focal length (f₂ᵥ) of the convex cylindrical lenses (21, 32) of the second cylindrical lens array (20, 31) is approximately as large as the distance between the first cylindrical lens array (17, 28) and the second cylindrical lens array (20, 31).

7. Device according to one of Claims 1 to 6, **characterized in that** the focal length (f₁ₖ) of the concave cylindrical lenses (30) of the first cylindrical lens array (28) is larger than the extent of the convex cylindrical lenses (29) of the first cylindrical lens array (28) in a direction (Z) that is aligned perpendicular to the direction (X) in which the cylindrical lenses (18, 19, 21, 22, 29, 30, 32, 33) are arranged next to one another, and perpendicular to the cylinder axes of the cylindrical lenses (18, 19, 21, 22, 29, 30, 32, 33) of the first and/or the second cylindrical lens array (17, 20, 28, 31).

8. Device according to Claim 7, **characterized in that** the focal length (f₁ₖ) of the concave cylindrical lenses (30) of the first cylindrical lens array (28) is at least twice as large as the extent of the convex cylindrical lenses (29) of the first cylindrical lens array in a direction (Z) that is aligned perpendicular to the direction (X) in which the cylindrical lenses (18, 19, 21, 22, 29, 30, 32, 33) are arranged next to one another, and perpendicular to the cylinder axes of the cylindrical lenses (18, 19, 21, 22, 29, 30, 32, 33) of the first and/or the second cylindrical lens array (17, 20, 28, 31).

9. Device according to either of Claims 7 and 8, **characterized in that**, in the direction (X) in which the cylindrical lenses (29, 30) are arranged next to one another, the concave cylindrical lenses (30) of the first cylindrical lens array (28) exhibit the same extent as the convex cylindrical lenses (29) of the first cylindrical lens array (28) in the direction (X) in which the cylindrical lenses (29, 30) are arranged next to one another.

10. Device according to one of Claims 1 to 9, **characterized in that** the focal length (f₁ₖ) of the concave cylindrical lenses (30) of the first cylindrical lens array (28) is larger than the focal length of the concave cylindrical lenses (33) of the second cylindrical lens array (31).

11. Device according to one of Claims 1 to 10, **characterized in that** the device comprises a substrate on which the first cylindrical lens array and the second cylindrical lens array are arranged on mutually opposite sides.

12. Device according to one of Claims 1 to 10, **characterized in that** the device comprises a first substrate (15, 26) and a second substrate (16, 27) differing from the first, in particular spaced apart from the first substrate (15, 26), the first cylindrical lens array (17, 28) being arranged on the first substrate (15, 26) and the second cylindrical lens array (20, 31) being arranged on the second substrate (16, 27).

13. Device according to Claim 12, **characterized in that** the device further comprises a third cylindrical lens array, which is arranged on the side of the first substrate (15, 26) that is opposite the first cylindrical lens array (17, 28), and has convex and concave cylindrical lenses with mutually parallel cylinder axes that are arranged next to one another in an alternating fashion, the cylinder axes of the cylindrical lenses (18, 19, 29, 30) of the first cylindrical lens array (17, 28) being arranged perpendicular to the cylinder axes of the cylindrical lenses of the third cylindrical lens array.

14. Device according to either of Claims 12 and 13, **characterized in that** the device further comprises a fourth cylindrical lens array, which is arranged on the side of the second substrate (16, 27) that is opposite the second cylindrical lens array (20, 31), and has convex and concave cylindrical lenses with mutually parallel cylinder axes that are arranged next to one another in an alternating fashion, the cylinder axes of the cylindrical lenses (21, 22, 32, 33) of the second cylindrical lens array (20, 31) being arranged perpendicular to the cylinder axes of the cylindrical lenses of the fourth cylindrical lens array.

## Revendications

1. Dispositif d'homogénéisation de la lumière comprenant
- un premier réseau de lentilles cylindriques (17, 28) que la lumière à homogénéiser (25) peut traverser, dans lequel le premier réseau de lentilles cylindriques (17, 28) comporte des lentilles cylindriques convexes et concaves (18, 19, 29, 30) ayant les axes de cylindres mutuellement parallèles, disposées alternativement côte à côte ;
- un deuxième réseau de lentilles cylindriques (20, 31) que la lumière traversant le premier réseau de lentilles cylindriques (17, 28) peut traverser, dans lequel le deuxième réseau de lentilles cylindriques (20, 31) comporte des lentilles cylindriques convexes et concaves (21, 22, 32, 33) ayant les axes de cylindres mutuellement parallèles, disposées alternativement côte à côte, et dans lequel les axes de cylindres des lentilles cylindriques (21, 22, 32, 33) du deuxième réseau de lentilles cylindriques (20, 31) sont orientés parallèlement aux axes de cylindres des lentilles cylindriques (18, 19, 29, 30) du premier réseau de lentilles cylindriques (17, 28), dans lequel les lentilles cylindriques concaves (19, 30) du premier réseau de lentilles cylindriques (17, 28) dans la direction (X) dans laquelle les lentilles cylindriques (18, 19, 29, 30) sont disposées côte à côte, présentent une autre extension que les lentilles cylindriques concaves (22, 33) du deuxième réseau de lentilles cylindriques (20, 28, 31) dans la direction (X) dans laquelle les lentilles cylindriques (21, 22, 32, 33) sont disposées côte à côte, et dans lequel les lignes de faîte des lentilles cylindriques convexes (18, 29) du premier réseau de lentilles cylindriques (17, 28) sont orientées dans la direction (Z), perpendiculaire à la direction (X) dans laquelle les lentilles cylindriques (18, 19, 21, 22, 29, 30, 32, 33) sont disposées côte à côte et perpendiculaire aux axes de cylindres des lentilles cylindriques (18, 19, 21, 22, 29, 30, 32, 33) du premier et du deuxième réseau de lentilles cylindriques (17, 20, 28, 31), et sont alignées avec les lignes de faîte des lentilles cylindriques convexes (21, 32) du deuxième réseau de lentilles cylindriques (20, 31) ;
**caractérisé en ce que** les lignes de faîte des lentilles cylindriques concaves (19, 30) du premier réseau de lentilles cylindriques (17, 28) sont orientées dans une direction (Z), perpendiculaire à la direction (X) dans laquelle les lentilles cylindriques (18, 19, 21, 22, 29, 30, 32, 33) sont disposées côte à côte et perpendiculaire aux axes de cylindres des lentilles cylindriques (18, 19, 21, 22, 29, 30, 32, 33) du premier et du deuxième réseau de lentilles cylindriques (17, 20, 28, 31), et sont alignées avec les lignes de faîte des lentilles cylindriques concaves (22, 33) du deuxième réseau de lentilles cylindriques (20, 31).

2. Dispositif selon la revendication 1, **caractérisé en ce que** les lentilles cylindriques concaves (19, 30) du premier réseau de lentilles cylindriques (17, 28) orientées dans la direction (X) dans laquelle les lentilles cylindriques (18, 19, 29, 30) sont disposées côte à côte, présentent une autre courbure que les lentilles cylindriques concaves (22, 33) du deuxième réseau de lentilles cylindriques (20, 31) orientées dans la direction (X) dans laquelle les lentilles cylindriques (21, 22, 32, 33) sont disposées côte à côte.

3. Dispositif selon une des revendications 1 ou 2, **caractérisé en ce que** les axes de cylindres des lentilles cylindriques (18, 19, 21, 22, 29, 30, 32, 33) du premier et/ou du deuxième réseau de lentilles cylindriques (17, 20, 28, 31), sont orientés perpendiculairement à la direction (X) dans laquelle les lentilles cylindriques (18, 19, 21, 22, 29, 30, 32, 33) sont disposées côte à côte.

4. Dispositif selon une des revendications 1 à 3, **caractérisé en ce que** les lentilles cylindriques concaves (22) du deuxième réseau de lentilles cylindriques (20) orientées dans la direction (X) dans laquelle les lentilles cylindriques (18, 19, 21, 22) sont disposées côte à côte, sont plus grandes que les lentilles cylindriques concaves (19) du premier réseau de lentilles cylindriques (17).

5. Dispositif selon une des revendications 1 à 4, **caractérisé en ce que** les lentilles cylindriques convexes (18) du premier réseau de lentilles cylindriques (17) orientées dans la direction (X) dans laquelle les lentilles cylindriques (18, 19, 21, 22) sont disposées côte à côte, sont un multiple de fois plus grandes que les lentilles cylindriques concaves (19) du premier réseau de lentilles cylindriques (17).

6. Dispositif selon une des revendications 1 à 5, **caractérisé en ce que** la distance focale (f₂ᵥ) des lentilles cylindriques convexes (21, 32) du deuxième réseau de lentilles cylindriques (20, 31) est du même ordre de grandeur que la distance entre le premier réseau de lentilles cylindriques (17, 28) et le deuxième réseau de lentilles cylindriques (20, 31).

7. Dispositif selon une des revendications 1 à 6, **caractérisé en ce que** la distance focale (f₁ₖ) des lentilles cylindriques concaves (30) du premier réseau de lentilles cylindriques (28) est plus grande que l'extension des lentilles cylindriques convexes (29) du premier réseau de lentilles cylindriques (28) dans une direction (Z) perpendiculaire à la direction (X) dans laquelle les lentilles cylindriques (18, 19, 21, 22, 29, 30, 32, 33) sont disposées côte à côte et perpendiculaire aux axes de cylindres des lentilles cylindriques (18, 19, 21, 22, 29, 30, 32, 33) du premier et/ou du deuxième réseau de lentilles cylindriques (17, 20, 28, 31).

8. Dispositif selon la revendication 7, **caractérisé en ce que** la distance focale (f₁ₖ) des lentilles cylindriques concaves (30) du premier réseau de lentilles cylindriques (28) est au moins deux fois plus grande que l'extension des lentilles cylindriques convexes (29) du premier réseau de lentilles cylindriques dans une direction (Z) perpendiculaire à la direction (X) dans laquelle les lentilles cylindriques (18, 19, 21, 22, 29, 30, 32, 33) sont disposées côte à côte et perpendiculaire aux axes de cylindres des lentilles cylindriques (18, 19, 21, 22, 29, 30, 32, 33) du premier et/ou du deuxième réseau de lentilles cylindriques (17, 20, 28, 31).

9. Dispositif selon une des revendications 7 ou 8, **caractérisé en ce que** les lentilles cylindriques concaves (30) du premier réseau de lentilles cylindriques (28) dans la direction (X) dans laquelle les lentilles cylindriques (29, 30) sont disposées côte à côte, présentent la même extension que les lentilles cylindriques convexes (29) du premier réseau de lentilles cylindriques (28) dans la direction (X) dans laquelle les lentilles cylindriques (29, 30) sont disposées côte à côte.

10. Dispositif selon une des revendications 1 à 9, **caractérisé en ce que** la distance focale (f₁ₖ) des lentilles cylindriques concaves (30) du premier réseau de lentilles cylindriques (28) est plus grande que la distance focale des lentilles cylindriques concaves (33) du deuxième réseau de lentilles cylindriques (31)

11. Dispositif selon une des revendications 1 à 10, **caractérisé en ce que** le dispositif comporte un substrat sur les faces opposées duquel sont disposés le premier réseau de lentilles cylindriques et le deuxième réseau de lentilles cylindriques.

12. Dispositif selon une des revendications 1 à 10, **caractérisé en ce que** le dispositif comporte un premier substrat (15, 26) et un deuxième substrat différent du premier, en particulier le substrat (16, 27) espacé du premier substrat (15, 26), le premier réseau de lentilles cylindriques (17, 28) étant disposé sur le premier substrat (15, 26) et le deuxième réseau de lentilles cylindriques (20, 31) sur le deuxième substrat (16, 27).

13. Dispositif selon la revendication 12, **caractérisé en ce que** le dispositif comporte de plus un troisième réseau de lentilles cylindriques disposé sur la face du premier substrat (15, 26) opposée au premier réseau de lentilles cylindriques (17, 28) et qui comporte des lentilles cylindriques convexes et concaves ayant des axes de cylindres mutuellement parallèles, disposées alternativement côte à côte, les axes de cylindres des lentilles cylindriques (18, 19, 29, 30) du premier réseau de lentilles cylindriques (17, 28) étant disposés perpendiculairement aux axes de cylindres des lentilles cylindriques du troisième réseau de lentilles cylindriques.

14. Dispositif selon une des revendications 12 ou 13, **caractérisé en ce que** le dispositif comporte de plus un quatrième réseau de lentilles cylindriques disposé sur la face du deuxième substrat (16, 27) opposée au deuxième réseau de lentilles cylindriques (20, 31) et qui comporte des lentilles cylindriques convexes et concaves ayant des axes de cylindres mutuellement parallèles, disposées alternativement côte à côte, les axes de cylindres des lentilles cylindriques (21, 22, 32, 33) du deuxième réseau de lentilles cylindriques (20, 31) étant disposés perpendiculairement aux axes de cylindres des lentilles cylindriques du quatrième réseau de lentilles cylindriques.
